# EUROPEAN PATENT SPECIFICATION

(11) **EP 0 469 354 B1**
(45) Date of publication and mention of the grant of the patent: **04.12.1996**
(21) Application number: 91111507.9
(22) Date of filing: 10.07.1991
(51) Int. Cl.: D01F 1/07, D01F 6/04, C08J 5/18

(54) **Flame-resistant polyolefinic fibres and films**
Flammfeste Polyolefinfasern und Folien
Fibre et films de polyoléfine résistant à la flamme

(30) Priority: 11.07.1990 IT 2090590
(43) Date of publication of application: 05.02.1992
(73) Proprietor: GREAT LAKES CHEMICAL ITALIA S.r.l., I-20138 Milano (IT)
(72) Inventor: Landoni, Gianluigi, I-20129 Milan (IT); Neri, Carlo, I-20097 San Donato Milanese, Milan (IT)
(74) Representative: Barz, Peter, Dr.

(56) References cited:
- EP-A- 0 334 423

## Description

The present invention relates to flame-resistant polyolefinic fibres and films, and to a process for their preparation.

Polyolefins are widely used in the production of articles such as films and fibres and there is a great necessity of flame-resistant polyolefinic products, particularly for safety reasons, in the various fields where they are used, for example, in the textile industry.

Various flame-proofing additives have been proposed in the art to give polyolefins flame-resistant properties. Generally, said additives consist of organic compounds containing phosphorus or halogen or both, or halogenated compounds combined with a metal oxide, as described by J.W. Lyons in "The Chemistry and Uses of Fire Retardants", Wiley Interscience 1970, pages 286-297.

The flame-proofing additives already known are not, however, entirely satisfactory, mainly because of their incompatibility with polyolefins and also because of the high amounts required to result in the necessary flame-resistance.

Flame-proofing compounds such as phenyl hydroxymethylene phosphinic acid and its alkyl esters of general formula (II): 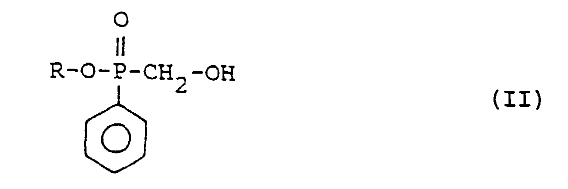 (where R is hydrogen or lower alkyl), are disclosed in US-A-4 517 355, together with the use thereof for making linear polyesters flame-resistant.

Oligomeric flame-proofing compounds of general formula (III): 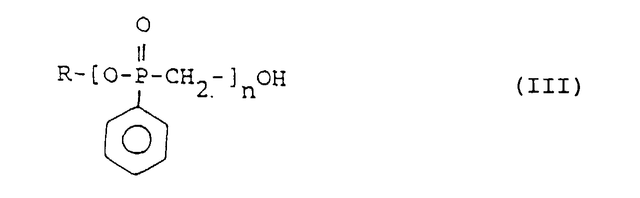 (where R has the above meaning and n has an (average) value of from 2 to 50), are described in US-A-4 812 502, together with the use thereof for making linear polyesters flame-resistant.

In EP-A-334 423, a linear copolyester is described, which is used as a flame-proofing agent and which contains in its macromolecule units deriving from (a) terephthalic acid; (b) (C₂-C₆) alkylene glycol; and (c) phenyl hydroxymethylene phosphinic acid, in a ratio of from 1:1:0.2 to 1:1:1, and in which the units (c) are distributed at random between units (a) and (b). Said copolyester is obtained by briefly contacting, under melting conditions, a linear polyester derived from terephthalic acid and a (C₂-C₆) alkylene glycol with an oligomer of formula (II).

It has now been found that some of the copolyester, which are described in the above EP-A, can be mixed with polyolefins and can render fibres and films thereof flame-resistant. Only small quantities of copolyesters are needed for said purpose.

In accordance with this, one of the aspects of the present invention concerns flame-resistant fibres and films comprising a polyolefin and, as flame-proofing additive, a copolyester containing units deriving from (a) terephthalic acid; (b) (C₂-C₆) alkylene glycol; and (c) phenyl hydroxymethylene phosphinic acid and having the general formula (I): 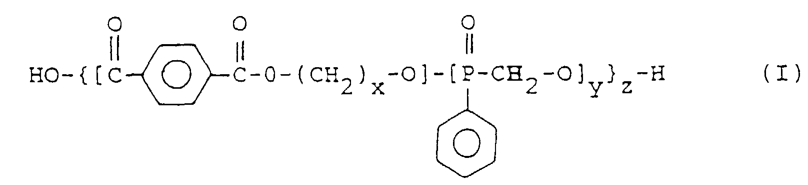 wherein:
- x: is a number ranging from 2 to 6;
- y: is a number ranging from 0.5 to 1; and
- z: is a number ranging from 2 to about 7.

The additive of formula (I) is, preferably, a copolyester containing units deriving from (a) terephthalic acid; (b) ethylene glycol (x = 2 in formula (I)); and (c) phenyl hydroxymethylene phosphinic acid. This additive has an average molecular weight ranging from about 700 to about 2000, a phosphorus content ranging from 6 to 8.8% by weight (calculated as pure element) and an amorphous or partially crystalline structure, with a softening or partial melting point of lower than 200°C, preferably ranging from 160 to 195°C. The melting point of the additive is an important characteristic for allowing it to homogenize in the molten state with a polyolefin.

Another aspect of the present invention concerns a process for the preparation of flame-resistant polyolefinic fibres and films, which comprises mixing and homogenizing, in the molten state (temperatures about 240-280°C), the additive of formula (I) and polyolefinic polymer(s) and the subsequent transformation of the homogeneous mixture into fibre or film. The flame-resistant additive (I) can be added to the polyolefin after drying, for example, at 150°C under vacuum, or during processing in the molten state, before extrusion to form the fibre or film.

According to the present invention, flame-resistant fibres and films can be obtained, starting from the usual polyolefins such as low, medium and high density polyethylene, polypropylene and the copolymers of two or more (alpha-)olefins. The most suitable polyolefin for this particular purpose is polypropylene.

The amount of additive (I) to give flame-resistant properties should be sufficient to ensure a phosphorus content (calculated as element) in the polyolefinic fibre or film of, preferably, from 0.1 to 3.0% by weight, particularly of from 0.25 to 1.0% by weight.

The following examples further illustrate the present invention without limiting the scope thereof in any way.

### EXAMPLE 1

3200 g of a prepolymer of polyethylene terephthalate having an average molecular weight of about 500 and 0.04% by weight of said prepolymer of phosphoric acid and antimony(III) oxide are charged into a 10 litre reaction vessel. The mixture is heated, under stirring, to 270-280°C, and the pressure is lowered from 760 Torr to less than 1 Torr over a period of 1.5 hours. When a fibre grade polyethylene terephthalate (intrinsic viscosity about 0.65 dl/mg) is obtained, 1400 g of an oligomer of general formula (III), wherein R is partly C₄-alkyl and partly hydrogen and n has an average value of 4.1, with a phosphorus content of 19.4% by weight are added, using a suitable charging cylinder equipped with a heating jacket (temperature of 150°C). A temporary drop in the viscosity of the mixture and a sharp temperature drop are observed. The high vacuum is re-applied and within 15 minutes, a vacuum of 0.03 Torr and an intrinsic viscosity of about 0.40 dl/g are obtained. The product is discharged, at a temperature of 215°C, through a valve situated at the bottom of the reaction vessel, in the form of a thin strip which, after cooling, is cut into chips.

The resulting flame-proofing additive is subjected to elemental analysis and acidimetric titration. The latter is carried out by dissolving the product in ortho-cresol and chloroform (1:1 by weight) and titrating it with an 0.5 M ethanol solution of tetraethylammonium hydroxide. In this manner, the molecular weight is obtained through the acidity of the product which, in its turn, is a function of the values of y and z in formula (I). More specifically, the additive thus obtained has a molecular weight of around 1456, a phosphorus content of 6.53% by weight and can be represented by the formula:

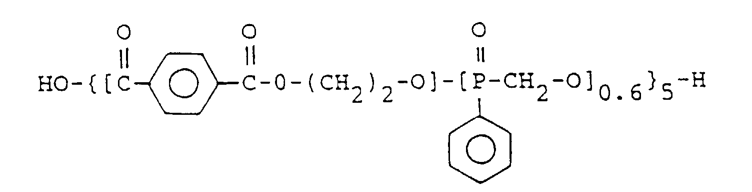

The additive which on DSC (differential scanning calorimetry) shows a melting point of 194°C for the crystalline part, is used as a flame-proofing agent for polypropylene in the following example 2.

### EXAMPLE 2

The additive of example 1 is micronized and a mixture is prepared which contains:

- Polypropylene flakes (Moplen^{(R)}FL F20; Himont) 943 g
- Additive of example 1 55 g
- Anox^{(R)} (Enichem Synthesis) * 1 g
- Alkanox ^{(R)} 240 (Enichem Synthesis) * 1 g

* : Tetrakis methylene (3,5-di-tert-butyl-4-hydroxy)hydrocinnamate;
**: Tris(2,4-di-tert-butyl phenyl) phosphite.

The dry blend is mixed for 10 minutes at 70 rpm in a Hentschel mixer and is then extruded in a Brabender extruder (19 mm screw), with a compression ratio of 4:1, equipped with a flat head. The following temperature profile is used: 200, 225, 235 and 250°C. Using a draw ratio of 3:1, an opalescent, 50 µm thick film, which shows good mechanical characteristics, is obtained.

A second test (comparative) is carried out with a formulation of polypropylene, Anox ^{(R)} 20, Alkanox^{(R)} 240 and a third test (comparative) is conducted with a formulation of polypropylene, Anox^{(R)}20, Alkanox^{(R)}240 and a commercial flame-proofing agent containing bromine derivatives and inorganic substances (Sandoflam^{(R)}5072, Sandoz) with the same quantity of additive as used in example 1.

A 50 cm portion of each of the films obtained in the three above-mentioned tests, having a width of 70 mm and a thickness of 50 µm, are fixed to a vertical support at one of their ends. The performance of the films is evaluated by exposing them to a flame obtained by using a 10 mm diameter Bunsen burner, the oxidizing flame having a 19 mm high blue cone, for the time necessary to start burning over the whole width of 70 mm.

In the case of the film used in the first test, which contains the additive of the present invention, the fire is extinguished almost immediately after the flame is removed. The film of the second test sample (without any flame-proofing agent) undergoes complete combustion, whereas the film of the third test sample (containing a commercial flame-proofing agent) requires extinguishment times of 2 to 3 seconds. In the latter case, there is also a development of fumes which are somewhat denser than in the other cases.

## Claims

1. Flame-resistant fibres and films, comprising a polyolefin and, as flame-proofing additive, a copolyester containing units deriving from (a) terephthalic acid; (b) (C₂-C₆) alkylene glycol and (c) phenyl hydroxymethylene phosphinic acid and having general formula (I): 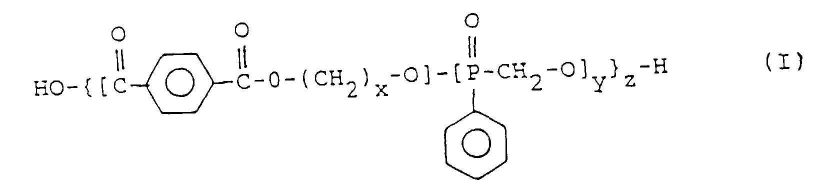 wherein:
x is a number ranging from 2 to 6;
y is a number ranging from 0.5 to 1; and
z is a number ranging from 2 to about 7.

2. Fibres and films according to claim 1, wherein said flame-proofing additive of formula (I) is a copolyester containing units deriving from (a) terephthalic acid; (b) ethylene glycol; and (c) phenyl hydroxymethylene phosphinic acid, and having an average molecular weight of from about 700 to about 2000, a phosphorus content of from 6 to 8.8% by weight, and an amorphous or partially crystalline structure, with a softening or partial melting point of lower than 200°C, preferably of from 160 to 195°C.

3. Films and fibres according to any one of claims 1 and 2, wherein the additive of formula (I) is present in an amount such as to ensure a phosphorus content of from 0.1 to 3.0% by weight, preferably from 0.25 to 1.0% by weight, with respect to the fibre or film.

4. Films and fibres according to any one of claims 1 to 3, wherein said polyolefin is low, medium and/or high density polyethylene, polypropylene or a copolymer of two or more olefins and, preferably, is polypropylene.

5. Process for the preparation of flame-resistant films and fibres according to any one of claims 1 to 4, wherein the polyolefin and the flame-proofing additive of formula (I) are mixed and homogenized in the molten state, at a temperature of from 240 to 280°C, and the mixture thus obtained is extruded in the form of film or fibre.

## Patentansprüche

1. Flammbeständige Fasern und Folien, umfassend ein Polyolefin und, als flammfest machendes Additiv, einen Copolyester, der Einheiten enthält, die abgeleitet sind von (a) Terephthalsäure; (b) (C₂-C₆)-Alkylenglycol und (c) Phenylhydroxymethylenphosphinsäure mit der folgenden allgemeinen Formel (I): 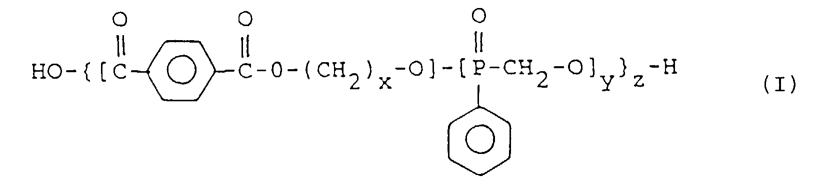 worin:
x eine Zahl im Bereich von 2 bis 6 ist;
y eine Zahl im Bereich von 0,5 bis 1 ist; und
z eine Zahl im Bereich von 2 bis etwa 7 ist.

2. Fasern und Folien nach Anspruch 1, in denen das flammfest machende Additiv der Formel (I) ein Copolyester ist, der Einheiten enthält, die abgeleitet sind von (a) Terephthalsäure; (b) Ethylenglycol; und (c) Phenylhydroxymethylenphosphinsäure, und ein durchschnittliches Molekulargewicht von etwa 700 bis etwa 2000, einen Phosphor-Gehalt von 6 bis 8,8 Gewichts-% und eine amorphe oder teilweise kristalline Struktur mit einem Erweichungs- oder teilweisen Schmelzpunkt von unter 200°C, vorzugsweise 160 bis 195°C, aufweist.

3. Folien und Fasern nach irgendeinem der Ansprüche 1 und 2, in denen das Additiv der Formel (I) in einer solchen Menge anwesend ist, daß ein Phosphor-Gehalt von 0,1 bis 3,0 Gewichts-%, vorzugsweise 0,25 bis 1,0 Gewichts-%, bezogen auf die Faser oder die Folie, sichergestellt wird.

4. Folien und Fasern nach irgendeinem der Ansprüche 1 bis 3, in denen das Polyolefin Polyethylen niedriger, mittlerer und/oder hoher Dichte, Polypropylen oder ein Copolymer von zwei oder mehr Olefinen und vorzugsweise Polypropylen ist.

5. Verfahren zur Herstellung von flammbeständigen Folien und Fasern nach irgendeinem der Ansprüche 1 bis 4, in welchem das Polyolefin und das flammfest machende Additiv der Formel (I) im geschmolzenen Zustand bei einer Temperatur von 240 bis 280°C gemischt und homogenisiert werden und die so erhaltene Mischung in Form von Folie oder Faser extrudiert wird.

## Revendications

1. Fibres et films ignifuges comprenant une polyoléfine et, en tant que additif ignifugeant, un copolyester renfermant des motifs dérivés (a) d'acide téréphtalique, (b) d'un alkylèneglycol en C₂₋₆ et (c) d'acide phénylhydroxyméthylènephosphinique et correspondant à la formule générale (I) 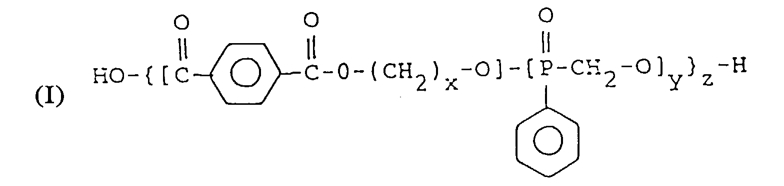 dans laquelle
x est un nombre compris entre 2 et 6;
y est un nombre compris entre 0,5 et 1, et
z est un nombre compris entre 2 et environ 7.

2. Fibres et films conformes à la revendication 1 dans lesquels ledit additif ignifugeant de formule (I) est un copolyester renfermant des motifs dérivés (a) d'acide téréphtalique, (b) d'éthylèneglycol et (c) d'acide phénylhydroxyméthylènephosphinique, et ayant une masse moléculaire moyenne d'environ 700 à environ 2000, une teneur en phosphore comprise entre environ 6 et 8,8 % en poids et une structure amorphe ou partiellement cristalline avec un point de ramollissement ou de fusion partielle inférieur à 200 °C, de préférence compris entre 160 et 195 °C.

3. Films et fibres conformes à une quelconque des revendications 1 et 2, dans lesquels l'additif de formule (I) est présent en une quantité permettant de garantir une teneur en phosphore comprise entre 0,1 et 3,0 % en poids, de préférence entre 0,25 et 1,0 % en poids par rapport à la fibre ou au film.

4. Films et fibres conformes à une quelconque des revendications 1 à 3, dans lesquels ladite polyoléfine est un polyéthylène basse densité, moyenne densité et/ou haute densité, un polypropylène ou un copolymère de deux ou plus d'oléfines, et est de préférence un polypropylène.

5. Procédé de préparation de films et fibres ignifuges conformes à une quelconque des revendications 1 à 4, dans lequel la polyoléfine et l'additif ignifugeant de formule (I) sont mélangés et homogénéisés à l'état fondu, à une température comprise entre 240 et 280 °C, et le mélange ainsi obtenu est extrudé sous forme d'un film ou d'une fibre.
